# EUROPEAN PATENT APPLICATION

(11) **EP 0 819 661 A2**
(43) Date of publication of application: **21.01.1998**
(21) Application number: 97111486.3
(22) Date of filing: 07.07.1997
(51) Int. Cl.: C04B 18/22, C04B 28/02, C04B 26/02, E01B 19/00, E04B 1/98, C04B 111/50

(54) **Mixtures for damping solide-borne sounds and vibrations in the earth and buildings**

(30) Priority: 09.07.1996 IT RE960051
(71) Applicant: Pescale S.p.A., 42014 Castellarano (RE) (IT)
(72) Inventor: Toschi, Angelo, 42014 Castellarano (RE) (IT)
(74) Representative: Zanella, Ireneo

(57) **Abstract**

Mixtures for damping solide-borne sounds and vibrations in the earth and buildings, as well as damping structures realized therewith, where are provided two components only consisting of materials obtained from rubbish and a binder. In a preferred embodiment said two components consist of tire chips and aggregates, obtained from building rubble, whereas the binder is cement. The damping structures are realized as diaphragm walls or foundations, for example for roads, railroads, industrial sheds and the like.

## Description

### Field of the invention

The present invention relates to mixtures for damping solide-borne sounds and vibrations in the earth and buildings according to the preamble of claim 1. Further, the present invention relates to structures according to claims 10 and 13 as well as to the use of said proposed mixtures and structures.

### Background of the invention

It is known that the transmission of solide-borne sounds and vibrations in the earth and buildings can lead to several disadvantages and can, for example, jeopardize the building and monument stability or cause acoustic pollution in the areas near the sources of said vibrations and sounds.

Sources of solide-borne sounds and vibrations in the earth are, e.g., subways, underground railroads, overhead railroads, surface railroads, the intense traffic, particularly with heavy vehicles, machine tools, textile machines and the like in factories and so on.

Such vibrations and sounds represent, therefore, an inconvenient environmental acoustic pollution for both the workers working in said factories and the inhabitants of the buildings which are located near railroads, subways, roads with an intense traffic and so on.

Therefore, it would be desirable to avoid, or at least to lower or damp as much as possible, the transmission of solide-borne sounds and vibrations through the earth and buildings.

An isolation from solide-borne sounds and vibrations could be nowadays obtained indeed, in particular on small areas, but only with a high technical commitment and high costs.

One of the specific problems, which has not yet been resolved in a satisfactory manner relates to the progressive degradation of urban buildings and monuments having a high historic-artistic value due to the continuous vibrating stresses to which said buildings and monuments are subjected.

Another aspect, which is well known due to its seriousness in the industrialized countries, is that of the formation of very large quantities of rubbish, especially building rubble and rubber containing materials, particularly used tires.

As to the magnitude order of the used tires which are disposed of per year, a study carried out in the United States for the EPA (Environment Protection Agency) states that in 1990 said magnitude order was of about 4 million (4,000,000) tons.

As to the disposal of said rubbish the actual situation can be summarized as follows:

In the field of the processing of the building rubber the most efficient technologies (e.g. IT-A-1,228,705) allow to obtain from said building rubber aggregates of high quality so that said aggregates can substitute the natural aggregates, and it is therewith achieved a sensible benefit for the environment.

On the contrary, in the case of the used tires there are actually no technologies allowing a convenient recycling thereof and which is able to permit a corresponding lowering of the use of the valuable natural resources.

The most modern technologies concerning the disposal of tires suggest simply to burn said used tires (EP-A-0 675 323) or to extract by maceration the rubber parts or to shred the tires (EP-B-0 482 723).

The drawbacks due to the tire combustion are obvious and involve pollution. Rubber, in form of dust obtained from used tires and small rubber chips and granules can be utilized as additive for asphalt mixtures for blankets, whereby the binder is made of road tar. The soundproofing results are moderate. However, in practice the rubber dust tends already into the mixture "to float", and to concentrate on the upper or visible road blanket.

Said disadvantage, which is unavoidable as it is due to the remarkable difference between the specific gravity of the mixture constituents and to the fluidity of said binder, leads to a rapid "chalking" of the road blanket, with a consequent releasing of polluting substances.

### Summary of the invention

One object of the present invention is to provide mixture and structures able to efficiently damp solide-born sounds and vibrations in the earth and buildings by utilizing mixture components obtained from rubbish.

It is another object of the present invention to provide structures which can be realized in a simple manner with a conventional equipment and conventional methods, for instance for the known concrete mixture and structure concerning the steps of mixing the mixture components, forming the mix, as well as transporting by truck mixers and casting said mix.

Still another object of the present invention is to provide structures able to damp or adsorb, that is to neutralize in an efficient manner a throughgoing passage of solide-borne sounds and vibrations through the earth and buildings by a special distribution of the tire chip component in said structures

In the context of the present invention with the term "binder" is conceptually included whatever binder which is able to create an anchoring constraint between the mixture components, and therefore it includes hydraulic and/or hydrocarburitic binders, for instance cement and/or a resin binder and/or an elastic or bituminous binder and/or a synthetic binders. Is cement used as a binder, so it is also used a corresponding amount of water as usually for the known concrete mixtures.

The stated objects are achieved, according to the present invention, by the features as indicated in claim 1.

As to the suggested structures the stated object is solved, according to this invention, by the features as indicated in claims 10 and 13.

Further advantageous embodiments of the present invention are inferable from the feature as indicated in the sub-claims.

With the mixtures, structures and the uses thereof in accordance with the present invention are achievable several important advantages.

Particularly with the teaching of the present invention it is possible to obtain efficient damping actions against solide-borne sounds and vibrations transmitted in the earth and the buildings by using mixture components which latter would otherwise create the known disposal problems, whereby the damping degree is advantageously and easily adjustable by adjusting the quantity of the rubber component. The advantage concerning the waste disposal is per se remarkable as it is provided a use of considerable amounts of both the substantial components of the proposed mixtures, that is the crushed building rubble and the tire chips, so that it is possible a remarkable recycling of said waste materials. Said recycling permits, in turn, to avoid a corresponding consumption of valuable materials like rubber and natural aggregates or virgin stone, whereby obvious advantages under the ecological aspect and the respect of the environment are achieved. Another advantage is to be seen in the fact that the mixtures, and the structures made therewith, can be realized with a low production cost.

Due to the fact that the equipment and methods for the production of the mixtures according to the present invention as well as of the structures obtained therewith are of conventional type for the production of concrete mixtures as well as for the casting thereof, it results that said mixtures and the structures made thereof can be realized economically and without requiring specific investments.

By providing an easily disaggregable mixture or mix can be achieved the further advantage of permitting a rapid and facilitated demolition of the structure or mix, that is conglomerate, in all the cases where such subsequent or late demolitions are implicit, e.g. in case of modification, repairing or maintenance interventions, for example in the case of pipes of electric, gas, water or telephone systems placed underground, sewage pipes and the like.

The intervention rapidity in these cases is very important because the above mentioned demolition interventions involve the breaking of sidewalks, pavements and roads with relative discomforts for the pedestrians and also involve traffic interruptions or limitations. With the provision of adding per se known self-lubricating means or mix additives is achieved the further advantage of providing self-leveling mixtures which do not present practically any reduction of their compression strength. Thus, the mixture is more "fluid" and it is possible to avoid, or drastically reduce leveling works which are to be carried out by hand.

### Brief Description of the Drawings

Other objects, advantages and details of the present invention will become more apparent upon reading the following detailed description based on exemplary embodiments and in conjunction with the annexed drawings in which:
Fig. 1 is a photographic illustration of tire chips of small size,
Fig. 2 is a photographic illustration of tire chips of greater size and containing metallic components,
Fig. 3 is a photographic illustration of a plan view on an agglomerate specimen used for test purposes,
Fig. 4 is a vertical section through a monument or building with a damping barrier according to the present invention,
Fig. 5 is a plan view of fig. 4,
Fig. 6 is a schematic vertical section through a subway,
fig. 7 is a vertical section through a road section in which is placed a distribution pipe,
Fig. 8 is a cross-section in principle through a road, a square pavement or the like, with acoustic damping.
Fig. 9 is a cross-section through a structure having in it three thickness zones with different rubber chip concentrations.

### Description of the preferred embodiments

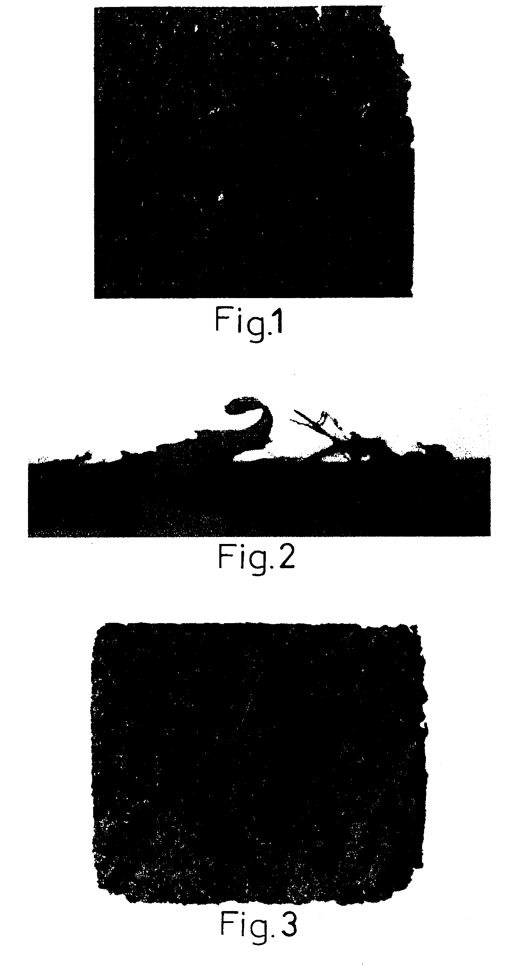

From the figures 1 and 2 is inferable the irregular conformation of the chips or granules utilized for the formation of the mixtures and structures in accordance with the present invention, and in fact utilized for the test and experiments carried out, for example, for the formation of test samples as shown in fig. 3.

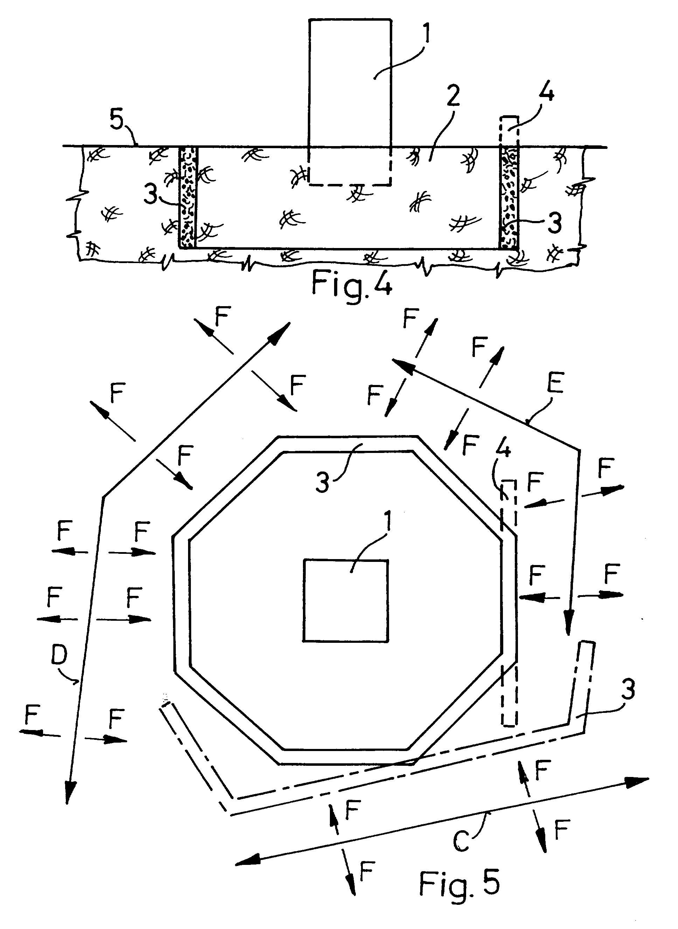

For clarity purposes in illustrating possible examples of use the mixtures and structures thereof in accordance with the present invention, the figures 4 - 8 are schematic illustrations on principle and not in scale.

The mixtures according to the present invention for damping the propagation of vibrations and solide-borne sounds through the earth and buildings are mixtures consisting essentially of two components which are intimately constrained together by a binder, whereby one component consists of chips of used tires and the other component consists of recyclable aggregates of building rubble (formed of conveniently crushed bricks, hollow tiles, hollow flat blocks, tiles in general, cement, masonry debris, ceramics, marbles and the like) and the binder can consists of any proper binders, or mixtures thereof, for example of an hydraulic binder and/or an hydrocarburitic and/or a resin binder and/or an elastic or bitumunous binder and/or a as synthetic binder.

The most tests and experiments have been made utilizing as a binder a cement, and more precisely a pozzoulanic 325 type IV.

Practically the mixture formation takes place as per se known for the formation of the concrete mixtures. Advantageously, also the necessary equipment, for example the apparatus for batching both components and the cement, with the relative water, as well as transport and mixing means (for example truck mixers), and the casting modes, for example direct casting into a trench or into a form, are also per se known, so that the mixture formation and the structures or barriers made thereof for damping solide-borne sounds and vibrations are realizable by those skilled in the art without any problems.

Even if the greater advantages, with respect to the ecological and economical aspects, can be achieved by using for both components recycled materials, functionally it is possible to obtain similar results by using natural aggregates instead of aggregates consisting of building rubble, so that the scope of the invention also includes the use of said natural aggregates or "pit" aggregates.

As to the granulometries, or bigger sizes, of the single parts of both suggested components and the percentages in weight of the latter, it should be noted that:
A) for the tire chips,
   - chip mixtures have been utilized having granulometries in the range between 1 mm, that is in the form of small grits, and 250 mm. The chips have irregular forms, that is a random form which depends on the shredding's ups and downs, and that is also valid for both the chips consisting of rubber only and the chips incorporating the tire metallic parts or wires. (Said metallic parts or wires are functionally very important as they represent an efficient interbonding and anchoring element in the formed conglomerate). It is also noted that the chip formation methods and the apparatus related therewith can be freely chosen, whereby important is the availability of said tire chips as suggested in the present invention.
   - The percentages in weight of the tire chip component, with reference to the weight of the aggregate or building rubble may vary in the range of 50% and 600%, preferably between 100% and 500%, and most preferably between 200% and 400%.
B) For the aggregates,
   - the used granulometries were between 1 mm and 30 mm, preferably between 1 mm and 20 mm, and most preferably between 1 and 10 mm.
C) Binder batching, in dm³ (cement)

Besides test batchings in the range between 150 and 350 it is possible to use batchings which are either "richer", for example up to 500, or "leaner", down to 100, these latter for example for the formation of mixtures or conglomerates which are easily disaggregable, as discussed above and below.

The formation of damping barriers according to this invention is now described below with reference first to figures 4 and 5.

In these figures 1 denotes an object, for example a building or a monument in a town which is to be protected from vibrations (arrows F) emitted, for example, from subway sections C, D and E which are near the object 1. In this case the damping barrier, formed with the mixtures according the present invention, could be formed by a diaphragm wall 3 which lays underground in the earth 2.

Since the vibrations emitted by subway sections C, D and E practically affect the whole perimeter of said monument or the like 1, said diaphragm wall 3 will enclose the whole perimeter of said monument or the like 1, for example with the shape of an octagon, as illustrated.

Said diaphragm wall could have obviously other arbitrary shapes.

If, due to practical or utility purposes, it should be provided a low wall, for example for delimitation purposes or as a stool support, a similar low wall could be obtained directly integrally with said diaphragm wall, as shown in phantom. Thus, in this case, said diaphragm wall 3 could be cast directly "in trench" whereas the low wall 4 will require a conventional form. In the case of a use as a support for stools, for example, said low wall 4 will have relative stool support elements built in, not shown. 5 denotes a paving, a road, a ground surface or the like.

If, in the example of figure 4 and 5, were provided a single vibration source, for example the only subway section C, the diaphragm barrier 3 could then have an open development, for instance with a C-shape, as illustrated with a dashed-dotted line in fig.5.

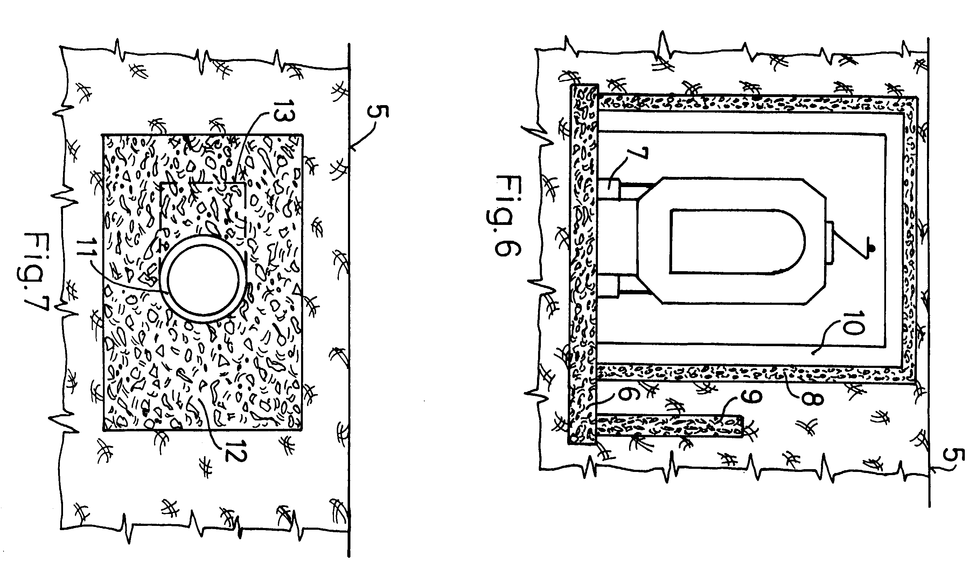

Referring now to fig. 6, there is schematically shown a conventional load bearing structure of a subway tunnel, in which several solide-borne sound and vibration damping barriers according to this invention have been provided. In more details, a first barrier in form of a foundation 6 for the track 7 as well as a portal-shaped barrier 8 which covers externally said subway tunnel are illustrated. A further wall barrier 9 is also provided in order to obtain a more efficient damping on the figure right side.

In practice, the dimensions of said damping barriers as well as the damping degree thereof will be defined according to the single case considering both a sizing as a function of the desired strength characteristics and the required insulation degree. Said last aspect is easily adjustable by varying the percentage of the tire chips put into the mixture, choosing the more convenient sizes of the mixture components and metering the binder.

From the tests carried out have been inferred several useful criteria for the formation or adjusting of the mixture in accordance with the present invention.

As to the binder, for example cement, it should be noted that the real function thereof is to constrain together the single aggregate parts and rubber chips. However, at the same time the skeleton formed by the solidified binder represents a rigid structure adapted to transmit solide-borne sounds and vibrations. It is further noted that also the presence of the aggregate parts which are not covered or enclosed by the rubber component reduce the damping capacity of the mixture and the structure thereof according the present invention. Therefore, it will be necessary to define for each case the wished damping capacity and adjust the latter in said mixtures considering the quantity of the incorporated rubber acting, as mentioned above, on the rubber quantity and the granulometry or size of the tire chips. This can take place, for example, according to characteristic curves which can be realized on the base of values derived from experiments. Thus, a moderate binder metering and a moderate rubble quantity provide a good damping capacity, whereby a moderate or low cement metering reduces the bending and anchoring strength of the components. From this it derives further that a good damping degree can be obtained with mixtures and relative barriers having a rubber percentage potentially high, and that said barriers are to be preferably utilized as compression stressed barriers, whereby by increasing the rubber component decreases the compression strength. The solide-borne sound and vibration dampening action has also been verified applying ultra-audible vibrations and measuring the speed thereof. In two samples having a rubber content of 10,8% and 114% has been measured a speed reduction of the ultra-audible vibration from 3300 m/sec to 1715 m/sec.

An improvement of the dampening characteristic can also be achieved by adding per se known fluidizing means and mix additives, as disclosed below.

In fig. 7 is shown a pipe 11, for example a gas distribution pipe which is underground and surrounded by a mixture or conglomerate 12 as a damping barrier realized according to the present invention. However in this case, considered the possibility of repeated access interventions to said pipe, for example for realizing a branching off 13, the used mixture 12 will provide an easy capacity to fall to pieces. This is achieved, as stated above, simply by reducing the binder, or adding fluidizing means or mix additives, that is by reducing the anchoring constrain force between the parts of tire chips and aggregate pieces. In such uses two advantages are obtained, that is the advantage of a vibrations dampening and that one of having an easy and rapid access to the pipe.

The mixtures and solide-borne sound and vibration damping barriers in accordance with the present invention can be used in many and various other application fields as, for example, the formation of foundations and pavements for industrial sheds, road foundations, foundations and lateral isolations for swimming pools, isolations for building containing devices which are sensitive to vibrations, like data processing centers, hospitals and so on. The damping barriers according to this invention can also be advantageously produced as precasts.

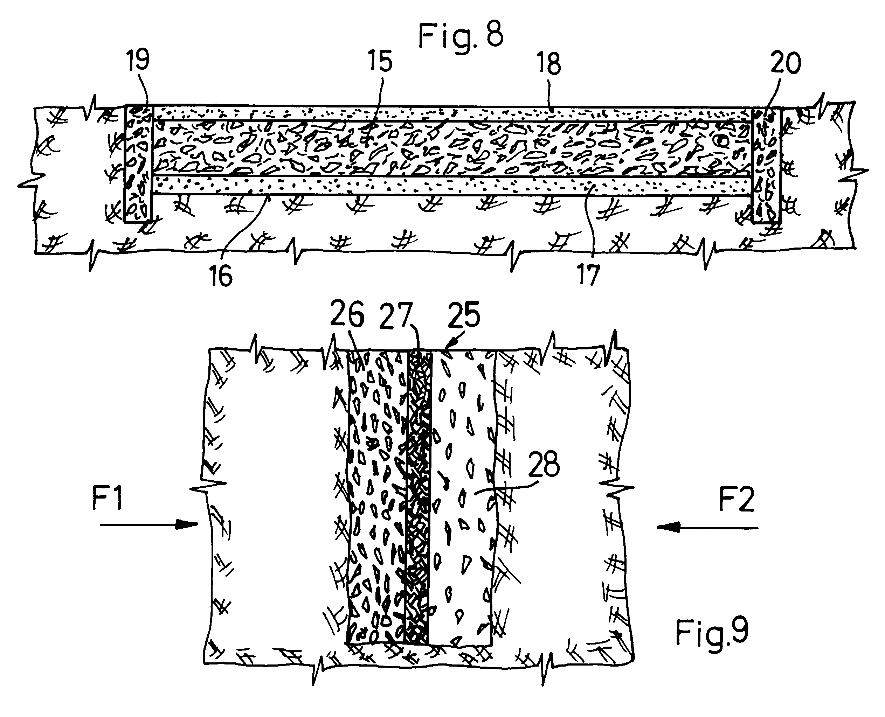

From fig. 8 it is inferable that in order to reduce the acoustic radiation due to the traffic of a road, squares or the like, a layer 15 of the mixtures in accordance with this invention is sandwiched between an excavated plane 16 or, preferably, a roadbed 17, and the road blanket 18 consisting, for example, of asphalt, porphyry blocks, selflocking blocks and the like. It is possible to obtain improved results, in presence of convenient sizes, by substituting said roadbed 17 with a rigid slab, for instance a concrete slab. In this case the agglomerate of mixtures 15 according to the present invention works on principle as a spring between two essentially rigid stops and possible settlings of the road blanket are avoided. In addition to the reduction of the acoustic radiation it is also possible to drastically reduce a propagation of solide-born vibrations from the road, square or the like, confining the deadening structure 15 between two low walls or curbs in trench 19 and 20 which consists of the mixtures according to this invention and are located, for example, as shown in fig. 8. In this manner it will be possible, for instance in areas near monuments, historic buildings and the like, to preserve the latter from continuous vibrations stresses due to the traffic and transmitted trough the ground.

By adding per se known fluidizing products or mix additives, mixtures are obtained in which the component parts are bonded together in a mutual "sliding" manner, so that the mixtures become of "selfleveling" type, as it is known, for instance, in the case of the known concrete mixtures having pit aggregates. This feature is advantageously exploitable, for example, when using easily disaggregable mixtures or agglomerates of road foundations, pavements and the like, as it is possible to avoid, or to drastically reduce, long and costly leveling works carried out by hand and it is also possible to improve, as in the case of road foundations, the elasticity characteristics, that is the restoration or elastic repositioning after compression stresses.

Referring to fig. 9, there is shown the teaching of providing vertical structures (wall-like barriers or diaphragm) or horizontal structures (foundations for roads, squares, pavements floor bottom for industrial sheds railroad and subway tracks)having a rubber chip concentration which varies along the structure thickness.

This teaching aims at drastically neutralizing the throughgoing passage of solide-borne sounds and vibrations through said structure by deforming the sound or vibration waves (waveform) when said sounds or vibrations cross a structure with different damping zones (damping actions) due to a different distribution of the rubber chip concentrations along the structure thickness.

In Fig. 9 the structure 25 has a continuous thickness formed by three layer-like thickness zones 26, 27 and 28, whereby the propagation direction of the solide-borne sounds or vibrations is denoted by the arrows F1 and/or F2.

The zones 26 and 28 can be composed of a mixture as described above but with a different percentage of rubber chips (for example as schematically graphically shown) whereas the sandwiched zone 27 may be composed of tire chips only, for example bonded by an elastic binder, as a bituminous or a resin binder or by a mixture of two or more of the above mentioned binders. The ratio between the zone thicknesses can be freely chosen and can range, for example, from 5:1:5 to 1:5:1.

Also the number of thickness zones, as well as the mutual disposition thereof can be freely chosen.

According to recent experiments it is deemed that an alternate disposition of more barriers having a different damping coefficient can contribute in efficiently neutralizing the propagation in the earth and buildings of solide-borne sounds and vibrations.

In practice, when realizing vertical structures it is first cast a lateral zone, for example zone 26, with a form or - when casting in trench - with an internal removable plate, and then after hardening of said zone 26, is cast the middle zone 27 - sandwiched between zone 26 and a lateral not shown plate -- , and at last is cast the zone 28. In the case of an horizontal structure 25 is formed first the underlying zone then, directly upon it, the middle zone, and finally the top zone.

## Claims

1. Mixtures for damping solide-borne sounds and vibrations in the earth and buildings, comprising components which are constrained together by a binder, characterized in that as mixture components are provided essentially an aggregate component composed of natural aggregates or crushed building rubble aggregates and a component composed of tire chips, whereby the binder consists of a natural or synthetic binder, and in that the rubber chip concentration can vary along the thickness of the structure composed of said mixtures.

2. Mixtures according to claim 1, characterized in that the tire chip component has a granulometry between 1 mm and 250 mm, preferably between 1 mm and 150 mm, and most preferably between 1 and 100 mm, and in that the percentage in weight of the tire chips with reference to the weight of the aggregate component is in the range between 50% and 600%, preferably between 100% and 500%, and most preferably between 200% and 400% with reference to the weight of the aggregate component.

3. Mixtures according to claim 1, characterized in that the tire chips are either free of the metallic components or they integrally contain said metallic components.

4. Mixtures according to claim 1, characterized in that the aggregate component consisting of natural aggregates or crushed building rubble has a granulometry in a range between 1 mm and 30 mm, preferably between 1 mm and 20 mm, and most preferably between 1 mm and 10 mm.

5. Mixtures according to claim 1, characterized in that the building rubble component consists mainly of parts of bricks, hollow tiles, hollow flat blocks, tiles in general, masonry debris, cement, ceramics, marbles and the like.

6. Mixtures according to claim 1, characterized in that as binder is provided cement, whereby the cement batching, expressed in g/dm³ of the mixture, is in the range between 100 and 500, preferebly between 150 and 400, and more preferably between 200 and 350, whereby in the case of easy disaggregable mixtures the cement batching is in the range between 50 and 200, preferably between 100 and 150.

7. Mixtures according to claim 1, characterized in that as binder is provided cement and/or an hydraulic binder and/or an hydrocarburitic binder and/or an elastic or bituminous binder and/or a resin binder and/or a synthetic binder, or mixtures thereof, adapted to form a constrain between the tire chips and/or the crushed building rubble parts, and in that the percentage in weight of the binder or resin with reference to the weight of the tire chips and aggregates or crushed building rubble is in the range between 5% and 50%, preferably between 10% and 40%, and more preferably between 15% and 40%.

8. Mixtures according to claim 1, characterized in that said tire chips are chips of tires of cars, heavy vehicles like trucks, busses, coaches, tractors, excavators and the like, which are singularly or mutually mixed used.

9. Mixtures according to one or more of claim 1 to 8, characterized in that they comprise a self-lubricating means or a mix additive.

10. Structure of a barrier for damping solide-borne sounds and vibrations through the earth and buildings, characterized in that it is formed with mixtures according to one or more of the claims 1 to 9 and it is realized as a wall-like structure which is totally or partially underground, like an isolation diaphragm sandwiched between the vibration or sound source and the object which have to be isolated.

11. Structure according to claim 10, characterized in that said isolating diaphragm preferably extends essentially perpendicularly to the propagation direction of the vibrations.

12. Structure according to claim 10, characterized in that said isolating diaphragm perimetrically surrounds, closely or at a distance, partially or totally, the object which has to be isolated.

13. Structure of a barrier for damping solide-borne sounds and vibrations trough the earth, characterized in that it is formed with mixtures according to one or more of the claims 1 to 9, and it is realized as a structure which is cast in a form or directly in a trench or it forms a foundation for roads, pavements, squares, or a floor bottom for industrial sheds, railroad and subway tracks and the like.

14. Structure according to one or more of claim 10 to 13, characterized in that it is realized as a precast.

15. Structure according to claim 13, characterized in that, in the case of a foundation for roads, pavements, squares and the like, the foundation is preferably sandwiched between an underlying roadbed or rigid slab, for example a concrete slab, in contact with the ground or an excavated plane, and the blanket consisting, for example, of asphalt, whereby are preferably provided lateral containing low walls or curbs, consisting of a mixture according to one or more of claims 1 to 9 or in the form of diaphragm structures for damping solide-borne vibrations according to claim 10.

16. Structure according to claim 1 and one or more of the claims 10 to 15, characterized in that the structure, in the form of a vertical and/or an horizontal damping barrier, wall-like diaphragm , foundation, bottom or the like, has a continuous structure thickness, in that said structure thickness consists of two or more layer-like thickness zones each composed of of the mixtures according to claims 1 to 9, and in that the concentrations of said rubber chips in said thickness zones are mutual different.

17. Use of the mixtures for damping solide-borne sounds and vibrations in the earth and buildings for the production of barrier structures according to one or more of the claims 9 to 16.
